# EUROPEAN PATENT SPECIFICATION

(11) **EP 0 694 573 B1**
(45) Date of publication and mention of the grant of the patent: **09.09.1998**
(21) Application number: 95111680.5
(22) Date of filing: 25.07.1995
(51) Int. Cl.: C08G 77/50

(54) **Branched organosilicon compounds and a method for their preparation**
Verzweigte Organosiliciumverbindungen und Verfahren zu ihrer Herstellung
Composés ramifiés organosiliciques et leur procédé de préparation

(30) Priority: 26.07.1994 JP 193689/94
(43) Date of publication of application: 31.01.1996
(73) Proprietor: Dow Corning Toray Silicone Company, Limited, Tokyo 103 (JP)
(72) Inventor: Kobayashi, Hideki, Dow Corning Toray, Nihonbashi-muromachi, Chuo-ku, Tokyo 103 (JP)
(74) Representative: Spott, Gottfried, Dr.

(56) References cited:
- EP-A- 0 382 338
- EP-A- 0 465 262
- EP-A- 0 465 263
- WO-A-94/06807
- US-A- 5 202 404

## Description

The present invention relates to branched organosilicon compounds having silalkylenesiloxane units, and to a method for their preparation.

Organosilicon compounds having silalkylenesiloxane units of the formula: 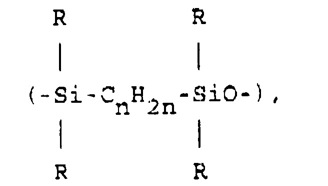 where R is a monovalent hydrocarbon group, and n is a positive, integer have been disclosed and are known to be resistant to molecular chain scission by ionic substances, such as acids or alkalis, compared to other organosilicons. Methods of making these compounds have been proposed by Izvestiya Akademii Nauk SSSR, Seriya Khimicheskaya, No. 4,739-744, April, 1971, and by JPA's 4-65428 and 4-65429.

However, in these methods, cyclic silalkylenesiloxanes, such as 2,2,6,6-tetramethyl-1-oxa-2,6-disilacyclohexane, are prepared in advance, and are then subjected to ring-opening polymerization. Thus, the polymer compounds obtained by the above methods are linear polymer compounds. There has been no prior disclosure of branched organosilicon compounds having silalkylenesiloxane units.

EP-A-0 382 338 describes an alkoxy functional resin obtained from a MQ resin.

It is an object of this invention to introduce a method for the preparation of silicon-bonded, hydrogen-endblocked organopolysiloxanes containing silalkylenesiloxane units.

It is another object of this invention to produce such branched organosilicon compounds which are useful as defoaming additives in acid or alkali environments.

It is a further object of this invention to prepare such branched organosilicon compounds which are useful as additives in silicone rubber compositions.

The present invention relates to an organosilicon compound having a unit formula selected from: 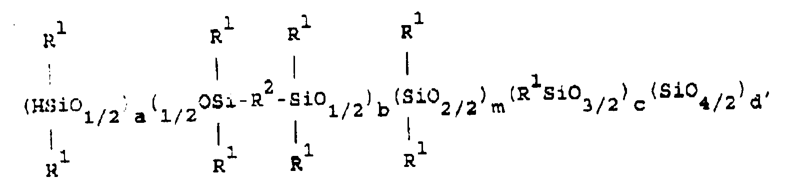 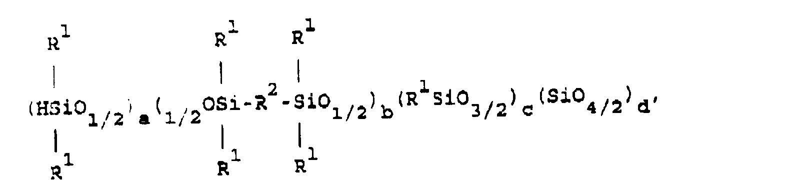 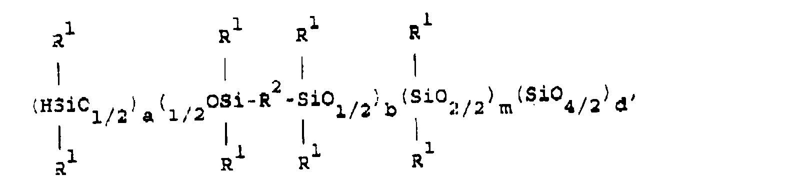 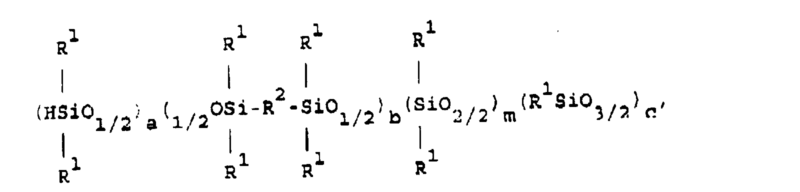 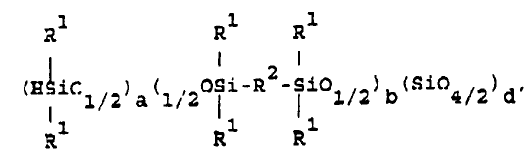 or 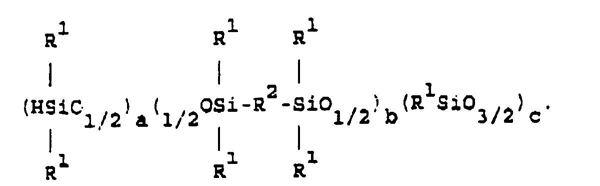 R¹ is a monovalent hydrocarbon group having from 1 to 10 carbon atoms and is free of aliphatic unsaturation. R² is an alkylene group having from 2 to 10 carbon atoms; m has value of greater than zero; a has a value of greater than zero; b has a value of greater than zero; c has value of greater than zero; and d has value of greater than zero.

R¹ is exemplified by alkyl groups, such as methyl, ethyl, propyl, butyl, pentyl, hexyl, heptyl, octyl, nonyl, or decyl; fluorine-containing organic groups such as 3,3,3-trifluoropropyl, or 3,3,4,4,5,5,6,6,6-nonafluorohexyl; aryl groups such as phenyl, tolyl, or xylyl; or aralkyl groups such as benzyl or phenethyl. Preferably R¹ is selected from methyl or phenyl.

R² is an alkylene group having from 2 to 10 carbon atoms and may be straight chain or branched. It is specifically exemplified by ethylene, methylethylene, ethylethylene, propylethylene, butylethylene, propylene, butylene, 1-methylpropylene, pentylene, hexenylene, heptenylene, octenylene, nonenylene, or decenylene. It is preferably selected from ethylene, propylene, butylene, and hexenylene.

In our organosilicon compounds, the number of silicon atoms in the polydiorganosiloxane units of the above formula is preferably less than 50% of the total number of silicon atoms in the branched organosilicon compounds of this invention.

In the organosilicon compounds of this invention, the (HR¹₂SiO_{1/2}) unit is the endblocking group, and the (O_{1/2}R¹₂SiR²R¹₂SiO_{1/2}) unit is a unit comprising the principal chain of the compound. Also, the (R¹SiO_{3/2}) unit and the (SiO_{4/2}) unit are units which cause branching of the compound. At least one of these latter units must be present.

The organosilicon compounds of this invention preferably have a weight average molecular weight of 1,000 or higher, as measured by gel permeation chromatography (GPC).

Our branched organosilicon compounds are soluble in selected organic solvents, for example, aromatic hydrocarbon solvents, such as toluene or xylene; aliphatic hydrocarbon solvents, such as hexane, heptane, octane, or nonane; alicyclic hydrocarbon solvents, such as cyclohexane, cycloheptane, or cyclooctane; and fluorine-containing solvents, such as trifluoromethylbenzene, 1,3-bis(trifluoromethyl)-benzene, or methylpentafluorobenzene. In many cases, our compounds are not soluble in methanol.

The ratio of a to d and m in these organosilicon determines their solubility in selected organic solvents. The solubility and characteristics of our compounds are also determined by the type of R¹, R², and R³ groups selected. Preferably, the ratio of a/b is 3 or less and the ratio of (c + d)/b is 1 or less.

Specific examples of these organosilicon compounds are compounds having their formula selected from:
(HMe₂SiO_{1/2})ₐ(O_{1/2}Me₂SiC₆H₁₂Me₂SiO_{1/2})_{b}(MeSiO_{3/2})_{c},
(HMe₂SiO_{1/2})ₐ(O_{1/2}Me₂SiC₆H₁₂Me₂SiO_{1/2})_{b}(SiO_{4/2})_{d},
(HMe₂SiO_{1/2})ₐ(O_{1/2}Me₂SiC₂H₄Me₂SiO_{1/2})_{b}(SiO_{4/2})_{d},
(HMe₂SiO_{1/2})ₐ(O_{1/2}Me₂SiC₂H₄Me₂SiO_{1/2})_{b}(MeSiO_{3/2})_{c},
(HMe₂SiO_{1/2})ₐ(O_{1/2}Me₂SiC₂H₄Me₂SiO_{1/2})_{b}(CF₃C₂H₄SiO_{3/2})_{c},
(HMe₂SiO_{1/2})ₐ(O_{1/2}MePhSiC₂H₄MePhSiO_{1/2})_{b}(MeSiO_{3/2})_{c},
and
(HMePhSiO_{1/2})ₐ(O_{1/2}MePhSiC₂H₄MePhSiO_{1/2})_{b}(MeSiO_{3/2})_{c},
wherein Me denotes methyl, Ph denotes phenyl, and a, b, c, and d have a value of greater than zero.

Our organosilicon compounds may contain the bifunctional siloxane unit, having the formula (R¹₂SiO_{2/2}), wherein R¹ is as defined above, in addition to the (HR¹₂SiO_{1/2}), (O_{1/2}R¹₂SiR³R¹₂SiO_{1/2}), (R¹SiO_{3/2}), and (SiO_{4/2}) units above described.

The present invention further relates to a method of making branched organosilicon compounds, comprising (I) reacting: (A) a siloxane selected from (i) a tetrasiloxane having the formula R¹Si(OR¹₂SiH)₃; (ii) a pentasiloxane having the formula Si(OR¹₂SiH)₄, or (iii) mixtures of (i) and (ii), wherein R¹ is a monovalent hydrocarbon group having from 1 to 10 carbon atoms and free of aliphatic unsaturation; and (B) a compound selected from the group consisting of (i) a diorganosiloxane having its formula selected from R³R¹₂SiO(R¹₂SiO)ₚSiR¹₂R³ or R³R¹₂SiOSiR¹₂R³ wherein R¹ is as defined above, R³ is an alkenyl group having from 2 to 10 carbon atoms, and p is an integer having a value of greater than zero; (ii) an unsaturated aliphatic hydrocarbon compound having from 3 to 10 carbon atoms and having at least 2 carbon-carbon double bonds; and (iii) an unsaturated aliphatic hydrocarbon compound having from 3 to 10 carbon atoms and having at least one carbon-carbon triple bond; in the presence of (C) a catalyst. The reactants of (I) can further comprise (D) a diorganopolysiloxane having its formula selected from HR¹₂SiO(R¹₂SiO)ₚSiR¹₂H or HR¹₂SiOSiR¹₂H, wherein R¹ and p are as defined above.

In the present invention, the tetrasiloxanes and/or pentasiloxanes of (A) are the raw materials which supply branching to our organosilicon compounds prepared by this method. R¹ is as defined above including preferred embodiments thereof. Preferably R¹ is selected from methyl or phenyl.

Although these siloxanes provide the branched part of the organosilicon compounds of the present invention, they can also partially constitute the principal chain or an endblocking group. These tetrasiloxanes and pentasiloxanes are used individually, or a mixture of the two can be used.

The tetrasiloxane of (A) is preferably selected from MeSi(OMe₂SiH)₃, MeSi(OMeEtSiH)₃, PhSi(OMe₂SiH)₃, or CF₃C₂H₄Si(OMe₂SiH)₃, where Et denotes ethyl and Me or Ph are defined supra. The pentasiloxane of (A) is preferably selected from Si(OMe₂SiH)₄ or Si(OMeEtSiH)₄.

Component (B) in our method comprises a part of the principal chain of our organosilicon compound. The alkenyl groups of R³ are preferably selected from vinyl, allyl, butenyl, pentenyl, hexenyl, or octenyl.

The diorganosiloxane of (i) is preferably selected from CH₂=CHMe₂SiOMe₂SiCH=CH₂,
CH₂=CHCH₂Me₂SiOMe₂SiCH₂CH=CH₂,
CH₂=CH(CH₂)₄Me₂SiOMe₂Si(CH₂)₄CH=CH₂,
CH₂=CH(C₂H₅)₂SiO(C₂H₅)₂SiCH=CH₂,
CH₂=CHCH₂MePhSiOMePhSiCH₂CH=CH₂,
CH₂=CHMe₂SiO(Me₂SiO)₂Me₂SiCH=CH₂,
CH₂=CHCH₂Me₂SiO(Me₂SiO)₂Me₂SiCH₂CH=CH₂, or
CH₂=CH(CH₂)₄Me₂SiO(Me₂SiO)₂Me₂Si(CH₂)₄CH=CH₂.

The unsaturated aliphatic hydrocarbon compounds of (ii) or (iii) are the components which introduce alkylene groups into the organosilicon compounds of this invention. The unsaturated aliphatic hydrocarbon compounds of (ii) are selected from 1,2-propadiene (allene); 1,2,-butadiene; 2-methyl-1,3-butadiene (isoprene); 2,3-dimethyl-1,3-butadiene; 1,3-pentadiene; 1,4-pentadiene; 1,5-hexadiene; and 1,3-cyclohexadiene.

The unsaturated aliphatic hydrocarbon compounds of (iii) are selected from acetylene, propyne, 1-butyne, 2-butyne, 1-pentyne, 2-pentyne, 3-methyl-1-butyne, 3,3-dimethyl-1-butyne, 1-hexyne, 2-hexyne, 1-heptyne, 1-octyne, 4-octyne, 1-nonyne, 1-decyne, and 5-decyne.

The amount of component (B) is appropriately adjusted to obtain an organosilicon compound having a desired molecular weight and amount of branching. Preferably, (B) is added such that the ratio of the number of moles of alkenyl groups in (B) to the number of moles of silicon-bonded hydrogen atoms in (A) is from about 0.5:1 to 1:0.5.

Component (C) is a catalyst which promotes an addition reaction between the silicon-bonded hydrogen atoms of (A) and the alkenyl groups of (B). This catalyst is selected from platinum catalysts, rhodium catalysts, palladium catalysts, or organic peroxides. Platinum catalysts are preferred since they readily promote addition polymerization. Preferred platinum catalysts include platinum black, silica-powder-supported platinum, carbon-powder-supported platinum, chloroplatinic acid, alcohol solutions of chloroplatinic acid, a complex of platinum and vinylsiloxane, or a complex of platinum and an olefin.

The amount of (C) is not particularly limited; however, it is preferred that (C) is added in a range of from 0.1 to 500 parts by weight per one million parts of the total weight of the reactants employed in this invention.

The reaction mixture of (I) may further comprise (D) a diorganopolysiloxane. Component (D) can comprise a part of the principal chain of our organosilicon compounds. The diorganopolysiloxane of (D) is selected from HMe₂SiOMe₂SiH, HMeC₂H₅SiOC₂H₅MeSiH, H(C₂H₅)₂SiO(C₂H₅)₂SiH, HMePhSiOMePhSiH, HMe₂SiO(Me₂SiO)₂Me₂SiH, HMe₂SiO(MePhSiO)₂Me₂SiH, or HMePhSiO(Me₂SiO)₂MePhSiH.

In our method, the order of addition of components (A) to (C), and optionally (D), is arbitrary, and is readily determined by those skilled in the art through routine experimentation. For example, one method comprises mixing components (A), (B), and optionally (D), heating and stirring this mixture, and then gradually adding component (C) to this mixture. Another method comprises mixing components (A) and (C), heating and stirring this mixture, and then gradually adding (B) to this mixture. Similar method comprises mixing (A) and (D), heating and stirring this mixture, next adding (B), and then gradually adding (C) to the resulting mixture.

In our method an organic solvent can be used as long as the objective of the present invention is not impaired. Organosilicon compounds of higher molecular weight are manufactured by the use of organic solvents in our invention. The organic solvent can be, for example, aromatic hydrocarbon compounds, such as toluene or xylene, aliphatic hydrocarbon compounds such as hexane, heptane, octane, or nonane, alicyclic hydrocarbon compounds, such as cyclohexane, cycloheptane, or cyclooctane, or fluorine-containing aromatic hydrocarbon compounds, such as trifluoromethylbenzene, 1,3-bis(trifluoromethyl)-benzene, or methylpentafluorobenzene.

The reaction conditions for our method are not particularly limited. If the reaction is conducted at ambient atmosphere, its reaction temperature is limited by the boiling points of components (A) - (C), and optionally (D), or the boiling point of the organic solvent (if used). If the boiling points of components (A) - (C), and optionally (D), and the organic solvent (if used) are relatively low, the reaction may be carried out under pressure.

Our silicon-bonded, hydrogen-endblocked organosilicon compounds are obtained by mixing the above components such that the number of moles of silicon-bonded hydrogen atoms in (A) is larger than the number of moles of alkenyl groups in (B).

The branched organosilicon compounds of this invention are soluble in certain organic solvents, and preferably have a weight average molecular weight of 1,000 or larger. This substance usually ranges in form from a viscous liquid to a gum at room temperature.

Our branched organosilicon compounds are resistant to molecular chain scission by ionic substances, such as acids or alkali. These compounds are useful as defoaming additives in such environments. Also, these compounds are suitable as an additive for silicone rubber compositions which cure by organic peroxides, addition reactions, or condensation reactions.

Furthermore, the organosilicon compounds of the present invention are useful starting materials for preparing organosilicon compounds which are endblocked by organofunctional groups through an addition reaction with a hydrogensilane which contains organofunctional groups. Our organosilicon compounds are also beneficial as the starting material for preparing novel composite materials of organic resin and organosilicon compounds by an addition reaction with organic resins having carbon-carbon double bond residues.

In the following Examples, the viscosity is the value measured at 25°C.

### Example 1

60 grams (g) of toluene, 53.6 g of methyltris(dimethylsiloxy)silane (MeSi(OSiMe₂H)₃), and 0.5 g of 0.5% carbon-supported platinum were loaded in a reaction vessel, and heated to 60°C while being stirred slowly. Next, a mixture of 16.56 g of 1,5-hexadiene and 20 g of toluene was added into the reaction vessel. After complete addition, the resulting mixture was heated and refluxed for 2 hours. After the reaction product was cooled and filtered, the solvent was removed by distillation, and a viscous liquid was obtained. The yield of this viscous liquid was 97%. This viscous liquid was analyzed by ²⁹Si, or ¹³C nuclear magnetic resonance spectral analysis (NMR), and Fourier transform infrared absorption spectra (FT-IR). From the above results, it was confirmed that this viscous liquid was an organosilicon compound having the average unit formula:
(HMe₂SiO_{1/2})ₐ(O_{1/2}Me₂SiC₆H₁₂Me₂SiO_{1/2})_{b}(MeSiO_{3/2})_{c}
wherein the ratio of a/b/c was 1/1/1.

By analysis of this organosilicon compound with gel permeation chromatography (GPC), it was found that its weight average molecular weight was 6,600, calibrated by polydimethylsiloxane, and the yield of said compound obtained from the peak area was 96%. Also, it was soluble in toluene and xylene.

### Example 2

60 g of toluene, 53.6 g of methyltris(dimethylsiloxy)silane and 0.5 g of 0.5% carbon-supported platinum were loaded in a reaction vessel, and heated to 95°C while being stirred slowly. Next, a mixture of 39 g of 1,3-divinyltetramethyldisiloxane and 10 g of toluene was added to the reaction vessel. After addition, the resulting mixture was heated and refluxed for 2 hours. After the product was cooled and filtered, the solvent was removed by distillation, and a viscous liquid was obtained with a yield of 99%. This viscous liquid was analyzed by ²⁹Si, and ¹³C NMR, and by FT-IR. From the above results, it was confirmed that this viscous liquid was an organosilicon compound having the average unit formula:
(HMe₂SiO_{1/2})ₐ(O_{1/2}Me₂SiC₂H₄Me₂SiO_{1/2})_{b}(MeSiO_{3/2})_{c}
wherein the ratio of a/b/c was 1/2.3/1.

By analysis with GPC, it was found that its weight average molecular weight was 16,000 calibrated by polydimethylsiloxane, and the yield obtained from the peak area was 90%. Also, this compound was soluble in toluene and xylene.

### Example 3

60 g of toluene, 49.2 g of tetrakis(dimethylsiloxy)silane, and 0.6 g of 0.5% carbon-supported platinum were loaded in a reaction vessel, and heated to 70°C while being stirred slowly. Next, a mixture of 28.4 g of 1,3-divinyltetramethyldisiloxane and 20 g of toluene was added to the reaction vessel. After addition, the resulting mixture was refluxed by heating for 3 hours. Subsequently, the reaction product was cooled and filtered, the solvent was removed by distillation; and a viscous liquid was obtained. The yield of this viscous liquid was 98%. This liquid was analyzed by ²⁹Si, and ¹³C NMR, and by FT-IR. From the above results, it was confirmed that this viscous liquid was an organosilicon compound having the average unit formula:
(HMe₂SiO_{1/2})ₐ(O_{1/2}Me₂SiC₂H₄Me₂SiO_{1/2})_{b}(SiO_{4/2})_{d}
wherein the ratio of a/b/d was 1.9/2/1.

By GPC analysis it was found that its weight average molecular weight was 8,000 calibrated by polydimethylsiloxane, and the yield obtained from the peak area was 90%. This substance was also soluble in toluene and xylene.

## Claims

1. An organosilicon compound having its unit formula selected from: 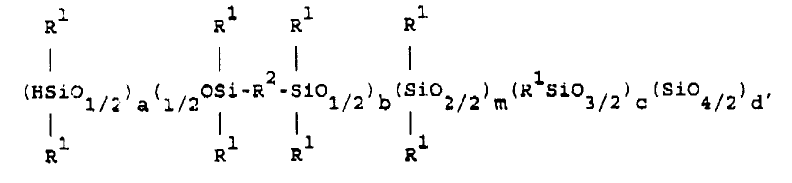 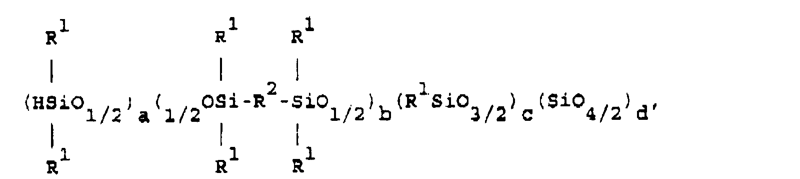 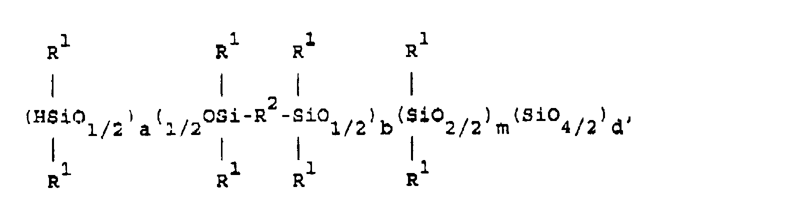 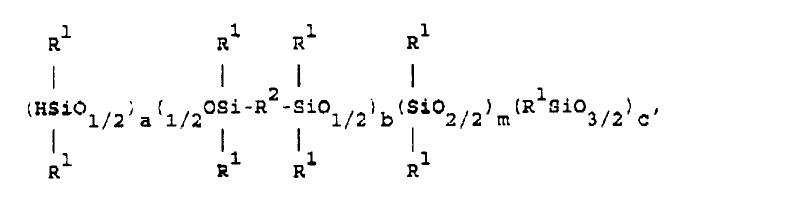 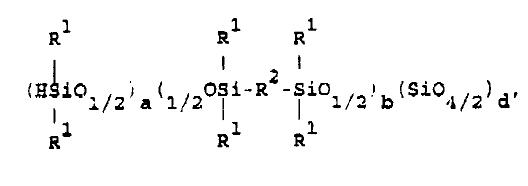 or 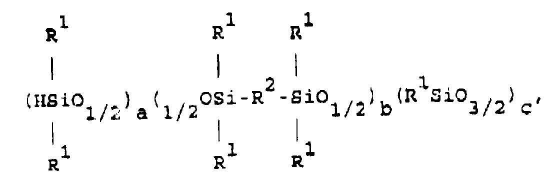 wherein R¹ is a monovalent hydrocarbon group having from 1 to 10 carbon atoms and free of aliphatic unsaturation, R² is an alkylene group having from 2 to 10 carbon atoms, m has value of greater than zero, a has a value of greater than zero, b has a value of greater than zero, c has value of greater than zero, and d has value of greater than zero.

2. A compound according to Claim 1, wherein the organosilicon compound is selected from a compound having its unit formula selected from the group consisting of:
(HMe₂SiO_{1/2})ₐ(O_{1/2}Me₂SiC₆H₁₂Me₂SiO_{1/2})_{b}(MeSiO_{3/2})_{c},
(HMe₂SiO_{1/2})ₐ(O_{1/2}Me₂SiC₆H₁₂Me₂SiO_{1/2})_{b}(SiO_{4/2})_{d},
(HMe₂SiO_{1/2})ₐ(O_{1/2}Me₂SiC₂H₄Me₂SiO_{1/2})_{b}(SiO_{4/2})_{d},
(HMe₂SiO_{1/2})ₐ(O_{1/2}Me₂SiC₂H₄Me₂SiO_{1/2})_{b}(MeSiO_{3/2})_{c},
(HMe₂SiO_{1/2})ₐ(O_{1/2}Me₂SiC₂H₄Me₂SiO_{1/2})_{b}(CF₃C₂H₄SiO_{3/2})_{c},
(HMe₂SiO_{1/2})ₐ(O_{1/2}MePhSiC₂H₄MePhSiO_{1/2})_{b}(MeSiO_{3/2})_{c},
and
(HMePhSiO_{1/2})ₐ(O_{1/2}MePhSiC₂H₄MePhSiO_{1/2})_{b}(MeSiO_{3/2})_{c},
wherein Me denotes methyl, Ph denotes phenyl, and a, b, c, and d have a value of greater than zero.

3. A method of making branched organosilicon compounds, comprising:
(I) reacting:
(A) a siloxane selected from
(i) a tetrasiloxane having the formula R¹Si(OR¹₂SiH)₃,
(ii) a pentasiloxane having the formula Si(OR¹₂SiH)₄, and
(iii) mixtures of (i) or (ii)
wherein R¹ is a monovalent hydrocarbon group having from 1 to 10 carbon atoms and free of aliphatic unsaturation; and
(B) a compound selected from the group consisting of
(i) a diorganosiloxane having its formula selected from R³R¹₂SiO(R¹₂SiO)ₚSiR¹₂R³ or R³R¹₂SiOSiR¹₂R³ wherein R¹ is as defined above, R³ is an alkenyl group having from 2 to 10 carbon atoms, and p is an integer having a value of greater than zero,
(ii) an unsaturated aliphatic hydrocarbon compound having from 3 to 10 carbon atoms and having at least 2 carbon-carbon double bonds, and
(iii) an unsaturated aliphatic hydrocarbon compound having from 3 to 10 carbon atoms and having at least one carbon-carbon triple bond; in the presence of
(C) a catalyst selected from platinum catalysts, rhodium catalysts, palladium catalysts, or organic peroxides.

4. A method according to Claim 3, wherein the reaction mixture of (I) further comprises (D) a diorganopolysiloxane having its formula selected from HR¹₂SiO(R¹₂SiO)ₚSiR¹₂H or HR¹₂SiOSiR¹₂H, wherein R¹ and p are as defined above.

5. A method according to Claim 3, wherein (A) is selected from MeSi(OMe₂SiH)₃, MeSi(OMeEtSiH)₃, PhSi(OMe₂SiH)₃, or CF₃C₂H₄Si(OMe₂SiH)₃, where Me denotes methyl, Et denotes ethyl, and Ph denotes phenyl.

6. A method according to Claim 3, wherein (A) is selected from Si(OMe₂SiH)₄ or Si(OMeEtSiH)₄ wherein Me denotes methyl, and Et denotes ethyl.

7. A method according to Claim 3, wherein R³ is selected from vinyl, allyl, butenyl, pentenyl, hexenyl, or octenyl.

8. A method according to Claim 3, wherein (B) is selected from CH₂=CHMe₂SiOMe₂SiCH=CH₂,
CH₂=CHCH₂Me₂SiOMe₂SiCH₂CH=CH₂,
CH₂=CH(CH₂)₄Me₂SiOMe₂Si(CH₂)₄CH=CH₂,
CH₂=CH(C₂H₅)₂SiO(C₂H₅)₂SiCH=CH₂,
CH₂=CHCH₂MePhSiOMePhSiCH₂CH=CH₂,
CH₂=CHMe₂SiO(Me₂SiO)₂Me₂SiCH=CH₂,
CH₂=CHCH₂Me₂SiO(Me₂SiO)₂Me₂SiCH₂CH=CH₂, or
CH₂=CH(CH₂)₄Me₂SiO(Me₂SiO)₂Me₂Si(CH₂)₄CH=CH₂, wherein
Me denotes methyl, and Ph denotes phenyl.

9. A method according to Claim 3, wherein (B) is selected from 1,2-propadiene; 1,2,-butadiene; 2-methyl-1,3-butadiene; 2,3-dimethyl-1,3-butadiene; 1,3-pentadiene; 1,4-pentadiene, 1,5-hexadiene; and 1,3-cyclohexadiene.

10. A method according to Claim 3, wherein (B) is selected from acetylene, propyne, 1-butyne, 2-butyne, 1-pentyne, 2-pentyne, 3-methyl-1-butyne, 3,3-dimethyl-1-butyne, 1-hexyne, 2-hexyne, 1-heptyne, 1-octyne, 4-octyne,1-nonyne, 1-decyne, and 5-decyne.

11. A method according to Claim 3, wherein the catalyst is a platinum catalyst selected from platinum black, silica-supported platinum, carbon-supported platinum, chloroplatinic acid, an alcohol solution of chloroplatinic acid, a complex of platinum and vinylsiloxane, or a complex of platinum and an olefin.

12. A method according to Claims 3 or 4, wherein the reaction mixture of (I) further comprises an organic solvent.

## Patentansprüche

1. Organosiliciumverbindung mit Einheiten einer Formel, die unter den folgenden Formeln ausgewählt ist: 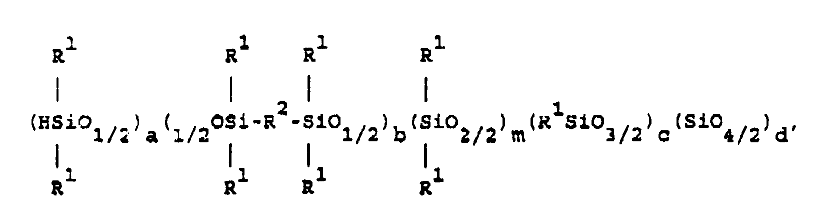 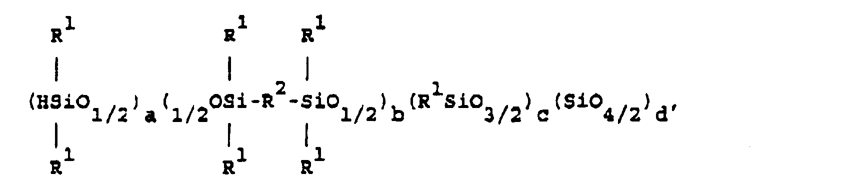 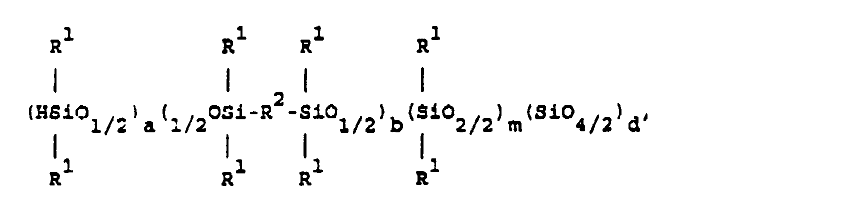 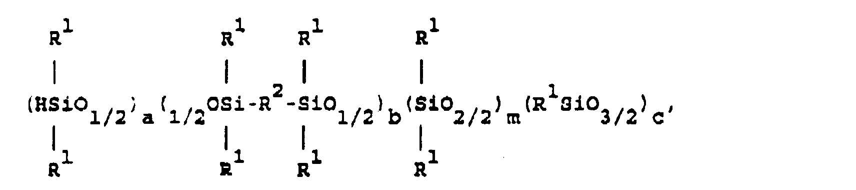 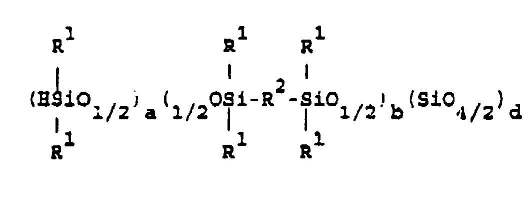 oder 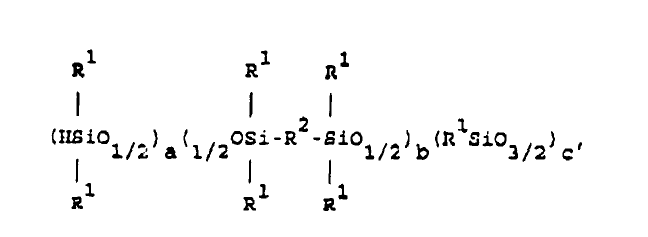 worin R¹ für eine einwertige Kohlenwasserstoffgruppe mit 1 bis 10 Kohlenstoffatom(en) steht und keine aliphatischen ungesättigten Bindungen aufweist, R² eine Alkylengruppe mit 2 bis 10 Kohlenstoffatomen darstellt, m einen Wert von mehr als 0 besitzt, a einen Wert von mehr als 0 besitzt, b einen Wert von mehr als 0 besitzt, c einen Wert von mehr als 0 besitzt und d einen Wert von mehr als 0 besitzt.

2. Verbindung nach Anspruch 1, wobei die Organosiliciumverbindung unter Verbindungen mit Einheiten einer Formel ausgewählt ist, die unter den folgenden Formeln ausgewählt ist:
(HMe₂SiO_{1/2})ₐ(O_{1/2}Me₂SiC₆H₁₂Me₂SiO_{1/2})_{b}(MeSiO_{3/2})_{c},
(HMe₂SiO_{1/2})ₐ(O_{1/2}Me₂SiC₆H₁₂Me₂SiO_{1/2})_{b}(SiO_{4/2})_{d},
(HMe₂SiO_{1/2})ₐ(O_{1/2}Me₂SiC₂H₄Me₂SiO_{1/2})_{b}(SiO_{4/2})_{d},
(HMe₂SiO_{1/2})ₐ(O_{1/2}Me₂SiC₂H₄Me₂SiO_{1/2})_{b}(MeSiO_{3/2})_{c},
(HMe₂SiO_{1/2})ₐ(O_{1/2} Me₂SiC₂H₄Me₂SiO_{1/2})_{b}(CF₃C₂H₄SiO_{3/2})_{c},
(HMe₂SiO_{1/2})ₐ(O_{1/2}MePhSiC₂H₄MePhSiO_{1/2})_{b}(MeSiO_{3/2})_{c}
und
(HMePhSiO_{1/2})ₐ(O_{1/2}MePhSiC₂H₄MePhSiO_{1/2})_{b}(MeSiO_{3/2})_{c},
worin Me für Methyl steht, Ph Phenyl bedeutet und a, b, c und d einen Wert von mehr als Null besitzen.

3. Verfahren zur Herstellung verzweigter Organosiliciumverbindungen durch (I) Umsetzen (A) eines Siloxans, das unter (i) einem Tetrasiloxan der Formel R¹si(OR¹₂SiH)₃, (ii) einem Pentasiloxan der Formel Si(OR¹₂SiH)₄ und (iii) Gemischen von (i) und (ii), worin R¹ für eine einwertige Kohlenwasserstoffgruppe mit 1 bis 10 Kohlenstoffatom(en) steht und keine aliphatisch ungesättigten Bindungen aufweist, ausgewählt ist, und (B) einer Verbindung die unter (i) einem Diorganosiloxan einer Formel, die unter R³R¹₂SiO(R¹₂SiO)ₚSiR¹₂R³ und R³R¹₂SiOSiR¹₂R³, wonn R¹ die oben angegebene Bedeutung besitzt, R³ für eine Alkenylgruppe mit 2 bis 10 Kohlenstoffatomen steht und p eine ganze Zahl mit einem Wert von mehr als Null darstellt, ausgewählt ist, (ii) einer ungesättigten aliphatischen Kohlenwasserstoffverbindung mit 3 bis 10 Kohlenstoffatomen und mindestens zwei Kohlenstoff-Kohlenstoff-Doppelbindungen und (iii) einer ungesättigten aliphatischen Kohlenwasserstoffverbindung mit 3 bis 10 Kohlenstoffatomen und mindestens einer Kohlenstoff-Kohlenstoff-Dreifachbindung ausgewählt ist, in Gegenwart (C) eines Katalysators, der unter Platinkatalysatoren, Rhodiumkatalysatoren, Palladiumkatalysatoren und organischen Peroxiden ausgewählt ist.

4. Verfahren nach Anspruch 3, wobei das Reaktionsgemisch der Reaktion (I) des weiteren (D) ein Diorganopolysiloxan einer Formel, die unter HR¹₂SiO(R¹₂SiO)ₚSiR¹₂H und HR¹₂SiOSiR¹₂H, worin R¹ und p die oben angegebene Bedeutung besitzen, ausgewählt ist, umfaßt.

5. Verfahren nach Anspruch 3, worin A unter Mesi(OMe₂SiH)₃, MeSi(OMeEtSiH)₃, PhSi(OMe₂SiH)₃ und CF₃C₂H₄Si(OMe₂SiH)₃, worin Me für Methyl steht, Et Ethyl bedeutet und Ph Phenyl ist, ausgewählt ist.

6. Verfahren nach Anspruch 3, worin A unter Si(OMe₂SiH)₄ und Si(OMeEtSiH)₄, worin Me für Methyl steht und Et Ethyl bedeutet, ausgewählt ist.

7. Verfahren nach Anspruch 3, worin R³ unter Vinyl, Allyl, Butenyl, Pentenyl, Hexenyl und Octenyl ausgewählt ist.

8. Verfahren nach Anspruch 3, worin (B) unter CH₂=CHMe₂SiOMe₂SiCH=CH₂, CH₂=CHCH₂Me₂SiOMe₂SiCH₂CH=CH₂, CH₂=CH(CH₂)₄Me₂SiOMe₂Si(CH₂)₄CH=CH₂, CH₂=CH(C₂H₅)₂SiO(C₂H₅)₂SiCH=CH₂, CH₂=CHCH₂MePhSiOMePhSiCH₂CH=CH₂, CH₂=CHMe₂SiO(Me₂SiO)₂Me₂SiCH=CH₂, CH₂=CHCH₂Me₂SiO(Me₂SiO)₂Me₂SiCH₂CH=CH₂ und CH₂=CH(CH₂)₄Me₂SiO(Me₂SiO)₂Me₂Si(CH₂)₄CH=CH₂, wobei Me für Methyl steht und Ph Phenyl bedeutet, ausgewählt ist.

9. Verfahren nach Anspruch 3, worin (B) unter 1,2-Propadien, 1,2-Butadien, 2-Methyl-1,3-butadien, 2,3-Dimethyl-1,3-butadien, 1,3-Pentadien, 1,4-Pentadien, 1,5-Hexadien und 1,3-Cyclohexadien ausgewählt ist.

10. Verfahren nach Anspruch 3, worin (B) unter Acetylen, Propin, 1-Butin, 2-Butin, 1-Pentin, 2-Pentin, 3-Methyl-1-butin, 3,3-Dimethyl-1-butin, 1-Hexin, 2-Hexin, 1-Heptin, 1-Octin, 4-Octin, 1-Nonin, 1-Decin und 5-Decin ausgewählt ist.

11. Verfahren nach Anspruch 3, wobei der Katalysator ein Platinkatalysator ist, der unter Platinschwarz, auf Siliciumdioxid als Träger aufgetragenem Platin, auf Kohlenstoff als Träger aufgetragenem Platin, Chlorplatin(IV)säure, einer Alkohollösung von Chlorplatin(IV)säure, einem Komplex aus Platin und Vinylsiloxan und einem Komplex aus Platin und einem Olefin ausgewählt ist.

12. Verfahren nach Anspruch 3 oder 4, wobei das Reaktionsgemisch der Reaktion (I) des weiteren ein organisches Lösungsmittel umfaßt.

## Revendications

1. Un composé organosilicié dont la formule de motifs est choisie parmi 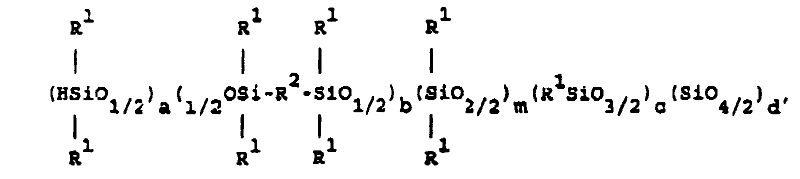 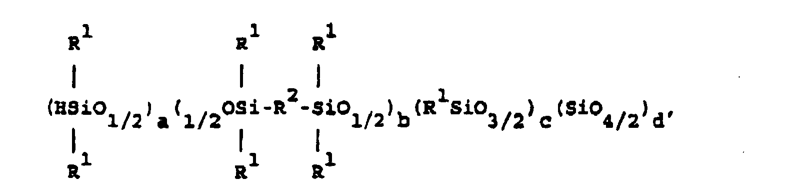 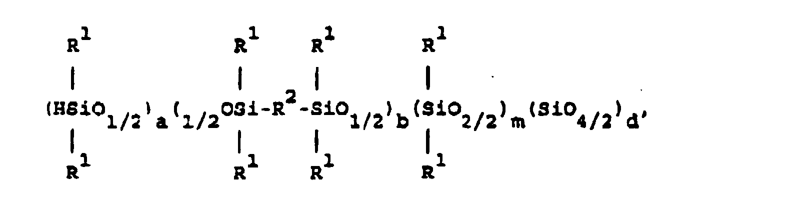 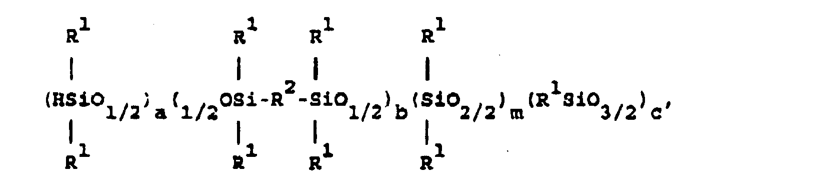 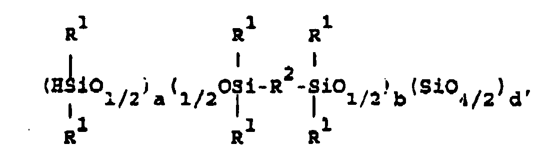 ou 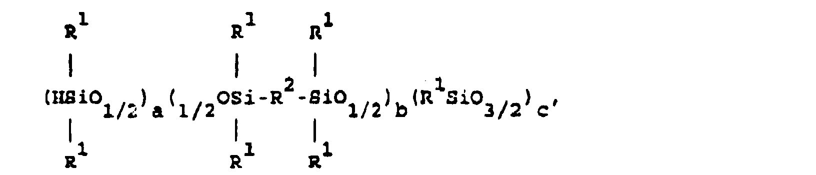 où R¹ est un groupe hydrocarboné monovalent ayant 1 à 10 atomes de carbone et exempt d'insaturation aliphatique, R² est un groupe alkylène ayant 2 à 10 atomes de carbone, la valeur de m est supérieure à zéro, la valeur de a est supérieure à zéro, la valeur b est supérieure à zéro, la valeur de c est supérieure à zéro et la valeur de d est supérieure à zéro.

2. Un composé selon la revendication 1, dans lequel le composé organosilicié est choisi parmi les composés dont la formule de motifs est choisie dans la classe formée par :
(HMe₂SiO_{1/2})ₐ(O_{1/2}Me₂SiC₆H₁₂Me₂SiO_{1/2})_{b}(MeSiO_{3/2})_{c},
(HMe₂SiO_{1/2})ₐ(O_{1/2}Me₂SiC₆H₁₂Me₂SiO_{1/2})_{b}(SiO_{4/2})_{d},
(HMe₂SiO_{1/2})ₐ(O_{1/2}Me₂SiC₂H₄Me₂SiO_{1/2})_{b}(SiO_{4/2})_{d},
(HMe₂SiO_{1/2})ₐ(O_{1/2}Me₂SiC₂H₄Me₂SiO_{1/2})_{b}(MeSiO_{3/2})_{c},
(HMe₂SiO_{1/2})ₐ(O_{1/2}Me₂SiC₂H₄Me₂SiO_{1/2})_{b}(MeSiO_{3/2})_{c},
(HMe₂SiO_{1/2})ₐ(O_{1/2}Me₂SiC₂H₄Me₂SiO_{1/2})_{b}(CF₃C₂H₄SiO_{3/2})_{c},
(HMe₂SiO_{1/2})ₐ(O_{1/2}MePhSiC₂H₄MePhSiO_{1/2})_{b}(MeSiO_{3/2})_{c},
et
(HMePhSiO_{1/2})ₐ(O_{1/2}MePhSiC₂H₄MePhSiO_{1/2})_{b}(MeSiO_{3/2})_{c}, où Me signifie méthyle, Ph signifie phényle et la valeur de a, b, c et d est supérieure à zéro.

3. Un procédé de préparation de composés organosiliciés ramifiés, consistant à
(I) faire réagir :
(A) un siloxane choisi parmi
(i) un tétrasiloxane ayant la formule R¹Si(OR¹₂SiH)₃,
(ii) un pentasiloxane ayant la formule Si(OR¹₂SiH)₄, et
(iii) les mélanges de (i) ou (ii)
où R¹ est un groupe hydrocarboné monovalent ayant 1 à 10 atomes de carbone et exempt d'insaturation aliphatique ; et
(B) un composé choisi dans la classe formée par
(i) un diorganosiloxane dont la formule est choisie parmi R³R¹₂SiO(R¹₂SiO) ₚSiR¹₂R³ ou R³R¹₂SiOSiR¹₂R³ où R¹ est tel que défini ci-dessus, R³ est un groupe alcényle ayant 2 à 10 atomes de carbone, et p est un nombre entier ayant une valeur supérieure à zéro,
(ii) un composé hydrocarboné aliphatique insaturé ayant 3 à 10 atomes de carbone et ayant au moins 2 doubles liaisons carbone-carbone, et
(iii) un composé hydrocarboné aliphatique insaturé ayant 3 à 10 atomes de carbone et ayant au moins une triple liaison carbone-carbone ; en présence de
(C) un catalyseur choisi parmi les catalyseurs au platine, les catalyseurs au rhodium, les catalyseurs au palladium ou les peroxydes organiques.

4. Un procédé selon la revendication 3, dans lequel le mélange réactionnel de (I) comprend de plus (D) un diorganopolysiloxane dont la formule est choisie parmi HR¹₂SiO(R¹₂SiO)ₚSiR¹₂H ou HR¹₂SiOSiR¹₂H, où R¹ et p sont tels que définis ci-dessus.

5. Un procédé selon la revendication 3, dans lequel (A) est choisi parmi Mesi(OMe₂SiH)₃, Mesi(OMeEtSiH)₃, PhSi(OMe₂SiH)₃ ou CF₃C₂H₄Si(OMe₂SiH)₃, où Me signifie méthyle, Et signifie éthyle et Ph signifie phényle.

6. Un procédé selon la revendication 3, dans lequel (A) est choisi parmi Si(OMe₂SiH)₄ ou Si(OMeEtSiH)₄ où Me signifie méthyle et Et signifie éthyle.

7. Un procédé selon la revendication 3, dans lequel R³ est choisi parmi les groupes vinyle, allyle, butényle, pentényle, hexényle ou octényle.

8. Un procédé selon la revendication 3, dans lequel (B) est choisi parmi CH₂=CHMe₂SiOMe₂SiCH=CH₂,
CH₂=CHCH₂Me₂SiOMe₂SiCH₂CH=CH₂,
CH₂=CH(CH₂)₄Me₂SiOMe₂Si(CH₂)₄CH=CH₂,
CH₂=CH(C₂H₅)₂SiO(C₂H₅)₂SiCH=CH₂,
CH₂=CHCH₂MePhSiOMePhSiCH₂CH=CH₂,
CH₂=CHMe₂SiO(Me₂SiO)₂Me₂SiCH=CH₂,
CH₂=CHCH₂Me₂SiO(Me₂SiO)₂Me₂SiCH₂CH=CH₂,ou
CH₂=CH(CH₂)₄Me₂SiO(Me₂SiO)₂Me₂Si(CH₂)₄CH=CH₂, où Me signifie méthyle et Ph signifie phényle.

9. Un procédé selon la revendication 3, dans lequel (B) est choisi parmi le 1,2-propadiène, le 1,2-butadiène, le 2-méthyl-1,3-butadiène, le 2,3-diméthyl-1,3-butadiène, le 1,3-pentadiène, le 1,4-pentadiène, le 1,5-hexadiène et le 1,3-cyclohexadiène.

10. Un procédé selon la revendication 3, dans lequel (B) est choisi parmi l'acétylène, le propyne, le 1-butyne, le 2-butyne, le 1-pentyne, le 2-pentyne, le 3-méthyl-1-butyne, le 3,3-diméthyl-1-butyne, le 1-hexyne, le 2-hexyne, le 1-heptyne, le 1-octyne, le 4-octyne, le 1-nonyne, le 1-décyne et le 5-décyne.

11. Un procédé selon la revendication 3, dans lequel le catalyseur est un catalyseur au platine choisi parmi le noir de platine, le platine supporté sur silice, le platine supporté sur carbone, l'acide chloroplatinique, une solution alcoolique d'acide chloroplatinique, un complexe de platine et de vinylsiloxane, ou un complexe de platine et d'une oléfine.

12. Un procédé selon la revendication 3 ou 4, dans lequel le mélange réactionnel de (I) comprend de plus un solvant organique.
